Europäisches Patentamt

European Patent Office

Office européen des brevets

(19)

(11) Publication number: 0 190 045
A2

# (12) EUROPEAN PATENT APPLICATION

(21) Application number: 86300615.1

(22) Date of filing: 29.01.86

(51) Int. Cl.⁴: H 04 N 1/46

(30) Priority: 30.01.85 JP 16156/85

(43) Date of publication of application:
06.08.86 Bulletin 86/32

(84) Designated Contracting States:
DE FR GB

(71) Applicant: TOKYO ELECTRIC CO., LTD.
6-13, 2-chome, Nakameguro
Meguro-ku Tokyo(JP)

(72) Inventor: Nishikawa, Hisashi
11-37 Shimonagakubo Nagaizumi-cho
Sunto Shizuoka(JP)

(72) Inventor: Matsumoto, Yasuo
155 Soechi-cho Jonai
Numazu Shizuoka(JP)

(72) Inventor: Makino, Ayumu
3-36 Tomita-cho
Mishima Shizuoka(JP)

(74) Representative: Evans, David Charles et al,
F.J. CLEVELAND & COMPANY 40-43, Chancery Lane
London, WC2A 1JQ(GB)

(54) Image recording method and its apparatus.

(57) An image recording method is disclosed which comprises the steps of jetting a single carrier gas stream from a nozzle disposed opposite to a recording member toward the recording member, causing vaporous dues formed by heating sublimable dyes to be blown out according to a picture signal into the carrier gas stream, and attaching the vaporous dyes carried on the carrier gas stress on to the recording member.

EP 0 190 045 A2

Croydon Printing Company Ltd

- 1 -

DESCRIPTION

This invention relates to the recording of images and has particular reference to the recording of images. At the present time, colour image recording may be effected by making use of sublimable dyes, for example, by mixing two or more kinds of colouring dyes in the form of vapour and causing the mixed vaporous dyes to be blown out and attached on to a recording member. Techniques of this type are generally disclosed in Japanese Patent Laid-open specifications nos. 57-1771 and 59-22759.

Such a method typically comprises the steps of heating dyes of a plurality of colours in their respective chambers to form dye vapour therefrom and collecting these various colours of dye vapour into a stream blowing out from a single nozzle. A sublimable coloured ink of, for example, four colours, yellow, magenta, cyan and black, of dye ink may be used and each is supplied by pressure means through a conducting tube into an ink jet nozzle where the dye ink is heated by heating means formed of nichrome wire or the like to cause the ink to a vaporous dye. Each of the vaporous dyes is excited by means of an

- 2 -

electromechanical transducing bar thus causing it to be ejected from an orifice toward a recording member, in the form of ink-gas particles. At this time, the heat for each colour of the dye ink and hence its sublimed amount is controlled by a heating signal generating device and the colour conditioning is achieved by mixing the vaporous dyes.

In a modification of this process there is provided a nozzle including three sublimable-dye sticks, a laser beam source, and an air system. A lens is controlled so that the laser beam from the laser beam source is focused on a desired sublimable-dye stick to produce dye vapour therefrom. The produced dye vapour is blown out from the tip of the nozzle by means of compressed air from the air system onto recording paper.

The disadvantages of these methods are:-

(i) A portion of the sublimed dye vapour remains in its passage whereby colour signal and picture signal are not reproduced accurately. More specifically, since it lacks effective means to eject the dye vapour from the nozzle, the dye vapour tends to remain in the

0190045

- 3 -

nozzle, and this remaining dye vapour in the nozzle is mixed and blown out together with the dye vapour produced in response to the next heating signal. Thus, the remaining dye vapour in the nozzle causes deterioration in the colour reproducibility.

(ii) Since there is provided an optical system, the apparatus becomes costly, and since the lens and laser beam source are required for a single nozzle and the dye sticks are to be incorporated into the nozzle, it is difficult to provide a multi-head structure.

According to the present invention, there is provided apparatus for colour engaging onto a recording member, which apparatus comprises:-

a plurality of sublimable dye means

means for supplying heat to each of said dye means to cause sublimation of the same in response to a picture signal

characterised by:

- 4 -

means for the supply of a carrier gas stream to entrain the vapourour dye and to carry it into dye receiving contact with said recording member.

It will be appreciated by the man skilled in the art that by heating a sublimable dye to be sublimed into dye vapour and causing the same according to a picture signal to be entrained in carrier gas stream jetted from a nozzle, and allowing the dye vapour carried on the carrier gas stream to be impinged to a recording member disposed opposite to the nozzle and attached to the recording member to form a picture image thereon, the disadvantage of the prior art methods are rapidly overcome since the gas stream acts to scavenge the residues of vaporous dye from the apparatus before the next cycle occurs. Furthermore, since ejected from the nozzle by means of the carrier gas stream in making the recorded image, little dissipation of the amount of the dye vapour occurs with a consequential improvement in the fidelity of the reproduction of colour images in response to the ongoing colour signal and picture signal. Since, for the same reason, no other ejecting or controlling means is required to be provided outside the nozzle, the apparatus can be miniaturized and simplified in structure and arrangement close to the recording member is made possible, and thus, improving the resolution of the copied image.

Following is a description by way of example only and with reference to the accompanying drawings of methods of carrying the invention into effect.

In the drawings

Fig. 1 is a side view in vertical cross-section showing a first preferred embodiment of the invention;

Fig 2 is a side view showing the external appearance of the same;

Fig 3 is an enlarged side view in vertical cross-section of a portion of Fig. 1;

Fig. 4 is a cross-sectional view taken along line A - A of Fig. 1;

Fig. 5 is a cross-sectional view taken along line B - B of Fig. 1;

Fig. 6 is an enlarged side view in vertical cross-section of an example of a control device;

Fig. 7 is a side view in cross-section showing a second preferred embodiment of the invention;

Fig. 8 is a perspective view of the whole body of the same;

Fig. 9 is an explanatory drawing showing an example of the prior art; and

Fig. 10 is a cross-sectional view showing another example of the prior art.

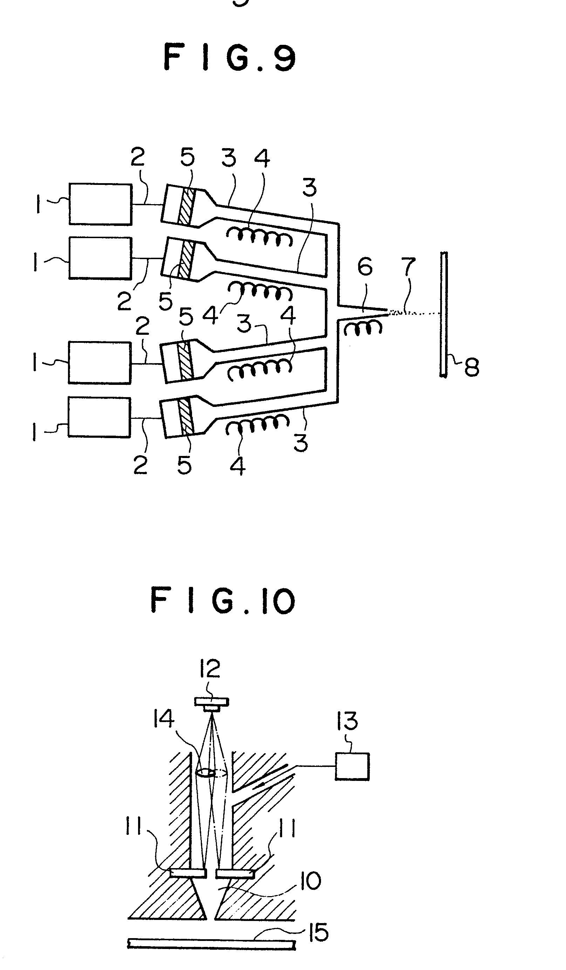

Turing first to the examples of the prior art, Figure 9 discloses a method which includes the steps of heating the dyes of a plurality of colours in respective chambers to form dye vapour therefrom and collecting these various colours of dye vapour into a stream blowing out from a single nozzle. In this particular example a sublimable coloured ink of, for example, four colours namely, yellow, magenta, cyan and black, are each supplied by pressure means 1, through a conducting tube 2 into an ink jet nozzle 3 where the dye ink is heated by a hot nichrome wire 4 and sublimed into a dye vapour. Each of the vaporous dyes is excited by means of an electromechanical transducing bar 5 to cause it to be ejected from a single orifice 6 towards a recording medium 8 in the form of ink gas particles 7. At this time the heat for each dye of is controlled by a heating signal generating device and the colour conditioning is achieved by the mixing of the various dyes in accordance with the signals obtained from the article to be copied.

Turning now to the embodiment of Figure 10 in the embodiment a nozzle 10 includes three sublimable dye sticks 11, laser beam source 12 and an air system 13. A lens 14 is controlled so that the laser beam from source 12 is focused onto a desired sublimable dye stick to produce a dye vapour therefrom. The resultant dye vapour is then blown from the tip of the nozzle 10 by means of compressed air from the air system onto the recording vapour.

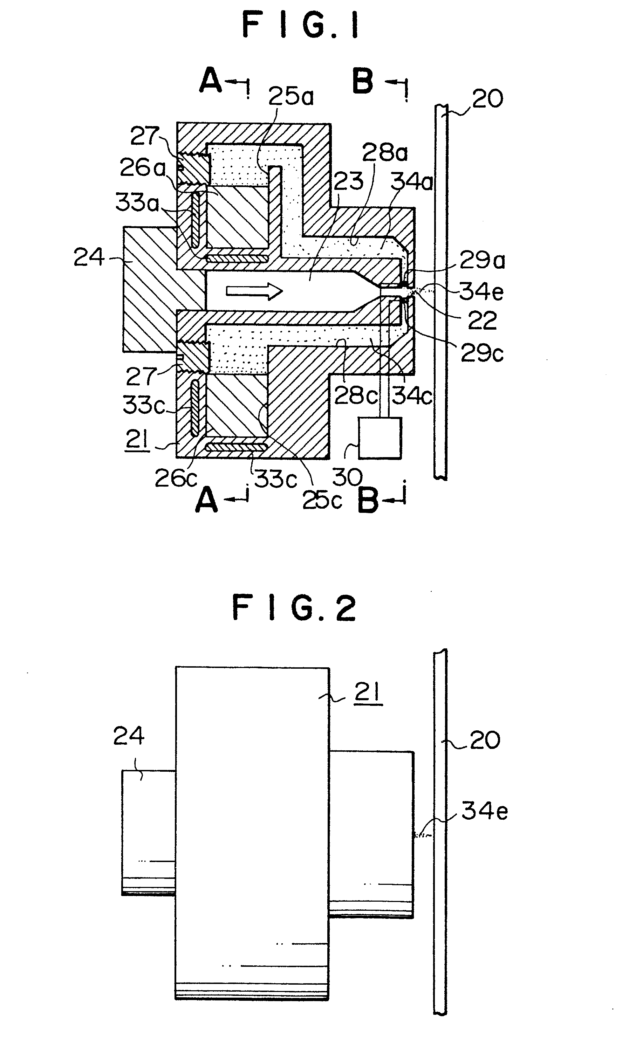

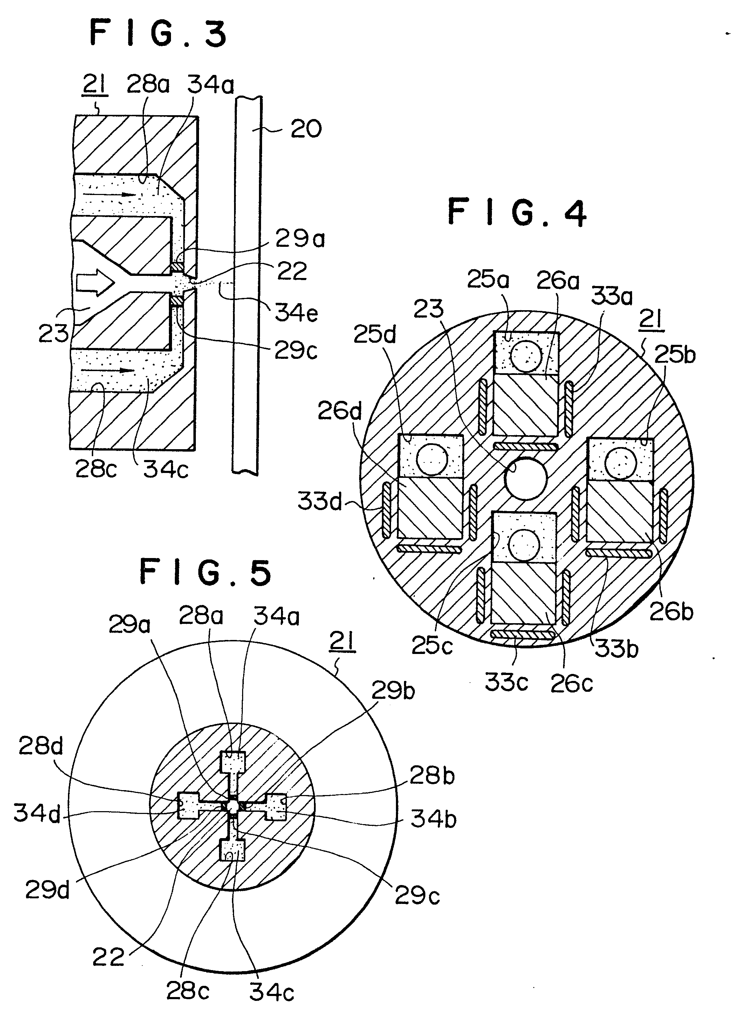

A first preferred embodiment of the invention will first be described with reference to Figs. 1 to 6, in which Fig. 2 is a side view showing an external appearance of a recording head 21 disposed opposite to a recording member 20. There is formed an orifice portion 22 of a small diameter in the center of the end portion of the recording head, and in the center within the same is formed an air nozzle 23 which is communicated with the orifice portion 22 and also communicated on its rear side with an air source 24.

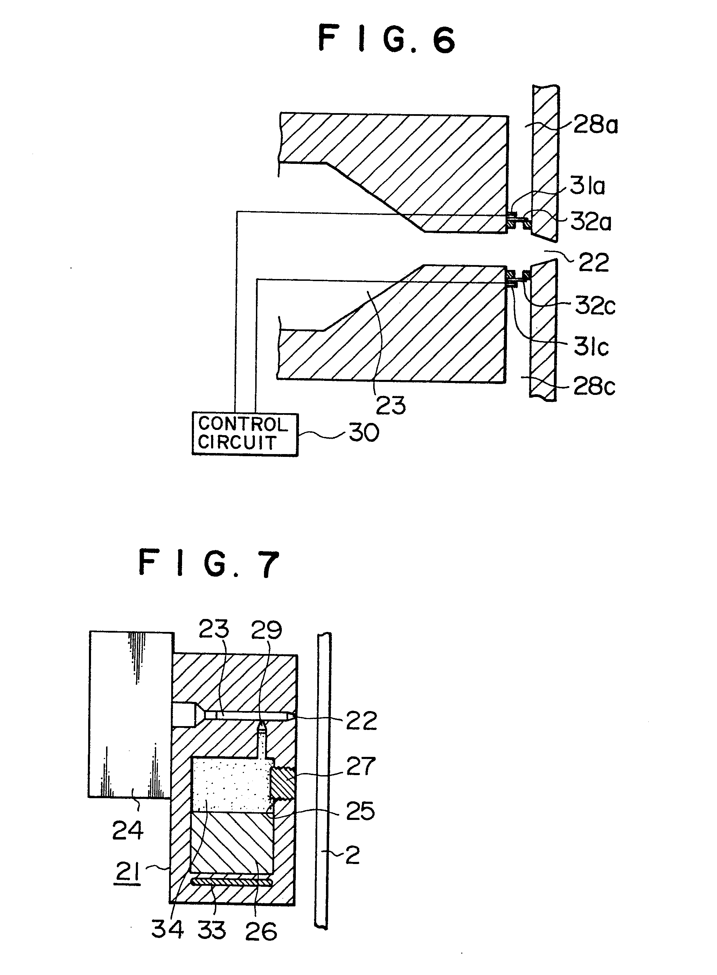

Separate from the air source, there are disposed two or more dye chambers 25 around the air nozzle 23 in such a manner that they communicate with each other in the vicinity of the orifice portion 22. These dye chambers 25 are adapted to be supplied and set with different colours of sublimable dyes 26 from dye supply portions 27. In the present embodiment, there are provided four dye chambers 25 as denoted by 25a - 25d and they are adapted to be set with four kinds of dyes, cyan 26a, magenta 26b, yellow 26c, and black 26d. In the described arrangement, these dye chambers 25 and the orifice portion 22 are communicated via dye vapour passages 28a - 28d, and on the end portions thereof on the side of the orifice portion 22, there are disposed mixture control devices 29a - 29d, respectively. These mixture control devices 29a - 29d are formed of a shutter or the like of cantilever, surface tension valve, electrostriction or magnetostriction resonator, magnetic fluid, or the like, and controlled by a signal from a control circuit 30 in accordance with a picture signal. Fig. 6 is for showing an electrostriction resonator 31 as an example of the mixture control device 29, in which the electrostriction resonator 31 is connected with a valve 32 for opening and shutting the opening portion of the dye vapour passage 28. By application of a voltage from the control circuit 30 to the electrostriction resonator 31, the electrostriction resonator 31 is caused to oscillate, and by this oscillation, the valve 32 is actuated to open and shut the opening portion of the dye vapour passage 28. In this case, since the subliming temperatures of the sublimable dye 26 is as high as $200 - 250^{0}C$, the electrostriction resonator 31 is selected from those

having high thermostability. The same can be said of a magnetostriction resonator, and one having the Curie point as high as $300^{0}C$ is preferred. And there are provided heating devices 33a - 33d around the sublimable dyes 26 set in the dye chambers 25 to heat the sublimable dye to sublime the same into dye vapour. Here, as the heating means, any of these methods can be used as heater (heating unit), radiation such as laser beam, high frequency heating, alternating magnetic field, electric current passed through the dye, corpuscular ray, sound wave, and so forth.

In the described structure, the sublimable dye 26a - 26d in each of the dye chambers 25a - 25d is heated by the heating device 33a - 33d to be sublimed into dye vapour 34a - 34d, and the dye vapour flows, by its own steam pressure, through the dye vapour passage 28a - 28d toward the mixture control device 29a - 29d. At this time, the mixture control devices 29a - 29d are adapted to control quantities of the vaporous dyes 34 passing therethrough according to respective picture colour signals obtained. Specific amounts of the vaporous dyes 34a - 34d passing through the mixture control devices 29a - 29d are mixed within the orifice portion 22 into mixed dye vapour 34e of specific mixing ratios. At this time, the orifice portion 22 is supplied with air pressure from the air source 24 through the air nozzle 23, and the mixed dye vapour 34e is immediately ejected from the orifice portion 22 carried on the carrier gas stream formed of the gas stream by the pressure air and attached on to the recording member 20 disposed on the opposite side. Thus, a colour image is formed on the recording member 20.

- 11 -

According to the present embodiment as described above, since the mixed dye vapour 34e produced within the orifice portion 22 is fast ejected therefrom by the carrier gas stream formed of the pressure air, there remains no dye vapour in the orifice portion 22, and so, the colours can be mixed according to the picture signals obtained each moment and colour picture images can be reproduced with fidelity to the colour signal and picture signal.  High speed recording also becomes possible since the mixed dye vapour 34e is fast ejected by the stream of the carrier gas. Further, as to the structure, there is no need of disposing any ejecting means or controlling means of the dye vapour in front of the orifice portion 22 whereby it is made possible to dispose the orifice portion 22 close to the recording member 20, and so, the diameter of the printed dot can be made substantially the same as that of the orifice portion 22.  Thus, if the diameter of the orifice portion 22 is made smaller, the resolution of the printing becomes so much the higher.  Further, because ejecting means or the like is not needed to be provided outside the orifice portion 22, the recording head 21 can be miniaturized and hence multi-nozzle arrangement can be readily achieved.

- 12 -

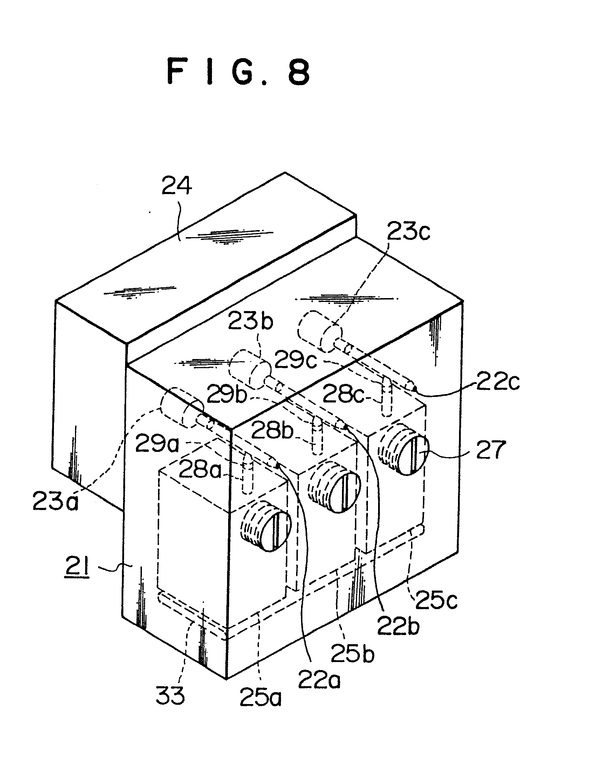

Now, a second preferred embodiment of the invention will be described with reference to Figs. 7 and 8, in which like or corresponding parts to those indicated in the above described embodiment are denoted by like characters. The present embodiment employs three colours, cyan 26, magenta 26b, and yellow 26c, of sublimable dyes 26, and the dye chambers 25a - 25c for the same are disposed in parallel and separated from each other, and, further, these dye chambers 25a - 25c are independently provided with air nozzles 23a - 23c. And therein it is adapted such that each the vaporous dye 34a - 34c supplied from each of the dye chambers 25a - 25c through the mixture control device 29a - 29c is ejected from the orifice portion 22a - 22c by the carrier gas stream from each the air nozzle 23a - 23c. While the thus ejected vaporous dyes 34a - 34c are attached on to the recording member 20, by giving the recording head 21 a scanning movement, the vaporous dyes 34a - 34c are appropriately mixed on the recording member 20 in delayed timing to provide mixed colour for making colour recording. More specifically, although mixing of the vaporous dyes was carried out within the orifice portion 22 in the previously described embodiment, the colour mixing in the present embodiment is performed on the recording

0190045

- 13 -

member 20 after the vaporous dyes have been ejected from the orifice portions 22a - 22c.

Although the description of the embodiments in the foregoing has been made as to colour recording making use of cyan, magenta, yellow, etc, the same may be similarly applicable to halftone recording by using and controlling the mixing ratio of white and black sublimable dyes.

Since, as described above, the present invention employs the carrier gas stream to eject the dye vapour from the nozzle in making record, the ejection of the dye vapour is fast carried out remaining no dye vapour in the nozzle, and so, at the time of colour recording or the like, degradation in the quality of the picture image due to the remaining dye vapour in the previous ejection is eliminated and reproduction of colour picture image with fidelity to the colour signal and picture signal is thus achieved. Also, in the structure of the apparatus, close access to the recording member can be attained since no provision of ejecting means for the dye vapour is required outside the nozzle, and therefore, recording with high resolution can be made possible, miniaturization of

- 14 -

the apparatus is made practicable, and multi-nozzle structure is made readily achievable.

0190045

- 15 -

<u>CLAIMS</u>

1.      Apparatus for colour engaging onto a recording member, which apparatus comprises:-

a plurality of sublimable dye means

means for supplying heat to each of said dye means to cause sublimation of the same in response to a picture signal

characterised by:

means for the supply of a carrier gas stream to entrain the vapourour dye and to carry it into dye receiving contact with said recording member.

2.      Apparatus as claimed in Claim 1 characterised in that the carrier gas stream is directed onto the recording medium via a nozzle and in that gas stream control means are provided for selectively opening and closing the gas stream thereby controlling the incidence of the gas stream an the recording medium.

0190045

- 16 -

3.    Apparatus as claimed in Claim 1 or Claim 2 characterised in that the gas stream is a stream of air.

4.    Apparatus as claimed in any preceding claim characterised in that the sublimable dyes means are the three colours cyan, magenta and yellow.

5.    Apparatus as claimed in Claim 4 characterised in that the sublimable dye means further includes black.

6.    Apparatus as claimed in any preceding claim characterised in that the control means are provided for controlling the extent of sublimation of each of the dye means in response to the picture signal thereby controlling the relative amount of each sublimed dye and in that means are provided for injecting the products of sublimation into said gas stream.

7.    Apparatus as claimed in Claim 6 characterised in that said injection means acts to inject the sublimed aliquot of each dye separately into said gas stream whereby mixing of the dyes is effected on the recording member.

# F I G. I

# F I G. 2

F I G . 3

F I G . 4

F I G . 5

F I G. 6

28a

31a

32a

22

32c

31c

28c

23

CONTROL CIRCUIT 30

F I G. 7

23  29

22

27

25

2

24

21

34  33  26

# F I G. 8

FIG.9

FIG.10